# EUROPEAN PATENT APPLICATION

(11) **EP 3 739 207 A1**
(43) Date of publication of application: **18.11.2020**
(21) Application number: 19174867.2
(22) Date of filing: 16.05.2019
(51) Int. Cl.: F03D 80/70, F03D 15/00, F16C 17/10, F16C 17/26

(54) **BEARING ARRANGEMENT FOR A WIND TURBINE AND WIND TURBINE**

(71) Applicant: Siemens Gamesa Renewable Energy A/S, 7330 Brande (DK)
(72) Inventor: Bak, Frank, 8210 Aarhus V (DK); Kanstrup, Troels, 8763 Rask Moelle (DK); Lemma, Edom, 7100 Jerlev, Vejle (DK); Michaelsen, Claus, 7400 Herning (DK); Soerensen, Morten, 8700 Horsens (DK)
(74) Representative: Aspacher, Karl-Georg

(57) **Abstract**

The invention relates to a bearing arrangement (70) for a wind turbine (10) comprising a bearing housing (80) and a drive shaft (90), whereby the drive shaft (90) is arranged within the bearing housing (80) in an axial direction along a longitudinal axis (A) of the bearing housing (80), the bearing arrangement (70) further comprising a downwind bearing (100) and an upwind bearing (200) as radial fluid bearings, whereby the downwind bearing (100) and the upwind bearing (200) are arranged between the bearing housing (80) and the drive shaft (90), the bearing arrangement (70) further comprising an axial bearing (300). The axial bearing (300) comprises an axial collar (301), whereby the axial collar (301) is integrally formed with the drive shaft (90).

## Description

The invention relates to a bearing arrangement for a wind turbine and a wind turbine.

In general, bearing arrangements of wind turbines comprise a bearing housing and a drive shaft, whereby the drive shaft is arranged within the bearing housing in an axial direction along a longitudinal axis of the bearing housing. Bearings of the bearing arrangement are arranged about the drive shaft, so that the drive shaft can be rotated within the bearing housing by means of a rotor of the wind turbine. Such a bearing arrangement is known from EP 3 276 192 A1, for example.

The bearing arrangement must be provided with axial load taking capabilities to be able to take an axial load from an axial or thrust force of the drive shaft. Such axial load taking capabilities may be provided by an axial bearing, which may be structurally integrated with the bearing arrangement. However, current solutions, e.g. a bolt connection between the axial collar of an axial bearing and the drive shaft, have a leakage potential, are cumbersome in their manufacture and difficult to service.

It is an object of the invention to eliminate or at least reduce disadvantages in the prior art techniques related to the structural integration of an axial bearing in the bearing arrangement, in particular to provide a bearing arrangement for a wind turbine with an axial bearing having no or little leakage potential, which is simple to manufacture and requires no or little maintenance.

This object is solved by the subject-matter of the claims. In particular, the object is solved by a bearing arrangement of a wind turbine according to claim 1 and a wind turbine according to claim 15. Further details of the invention unfold from the other claims as well as the description and the drawings. Thereby, the features and details described in connection with the bearing arrangement of the invention apply in connection with the wind turbine of the invention, so that regarding the disclosure of the individual aspects of the invention it is or can be referred to one another.

According to a first aspect of the invention, the invention relates to a bearing arrangement for a wind turbine comprising a bearing housing and a drive shaft, whereby the drive shaft is arranged within the bearing housing in an axial direction along a longitudinal axis of the bearing housing, the bearing arrangement further comprising a downwind bearing and an upwind bearing as radial fluid bearings, whereby the downwind bearing and the upwind bearing are arranged between the bearing housing and the drive shaft, the bearing arrangement further comprising an axial bearing, whereby the axial bearing comprises a axial collar, whereby the axial collar is integrally formed with the drive shaft.

By means of the invention, there are no weak points, such as bolt connections, between the axial collar and the drive shaft which would have a potential of leaking lubricant from the axial bearing or which would require maintenance. Further, the bearing arrangement of the invention is simple to manufacture in that it requires few manufacturing steps.

Preferably, the axial collar is monolithically designed with the drive shaft. Thereby, a particularly simple manufacturing method of the axial collar is provided and structural integrity of the axial collar and the drive shaft is further improved.

Further preferably, the axial collar is arranged about an entire circumference of the drive shaft. Thereby, a large surface on the axial collar for taking axial loads is provided and the overall load distribution on the axial collar is improved.

Moreover preferably, the axial collar extends outwards of the drive shaft. In other words, the axial collar extends radially outwards relative to a cylindrical surface of the drive shaft. Thereby, the axial collar is favorably located on an outside of the drive shaft, which allows for a simple design of the axial bearing.

Preferably, the axial bearing is arranged at a downwind portion or an upwind portion of the drive shaft. The downwind portion may be a portion extending from a downwind end of the drive shaft in an axial direction along the longitudinal axis to an upwind end of the drive shaft and having a length of 10% of an entire length of the drive shaft. The upwind portion may be a portion extending from an upwind end of the drive shaft in an axial direction along the longitudinal axis to a downwind end of the drive shaft and having a length of 10% of an entire length of the drive shaft. In particular, the axial bearing may be arranged at the downwind end or the upwind end of the drive shaft.

Preferably, the downwind bearing or the upwind bearing of the bearing arrangement is located adjacent to the axial bearing. Thereby, the manufacturing of the bearings may be further facilitated.

Preferably, the downwind bearing or the upwind bearing is fluidically connected to the axial bearing. In other words, a lubricant, e.g. oil, provided in the downwind bearing or the upwind bearing can flow to the axial bearing. Thereby, a radial bearing and an axial bearing can be combined so as to reduce the maintenance requirements with regard to providing the lubricant in the bearings.

In particular, the axial bearing comprises an axial bearing stop arranged opposite of the axial collar. The axial bearing stop itself or components attached thereto may form a contacting stop for the axial collar, when the axial collar is axially moved in an axial direction along the longitudinal axis.

Preferably, multiple axial bearing pads are, in particular reversibly, attached to the axial bearing stop, whereby an effective path of the axial bearing is formed between the axial collar and the multiple axial bearing pads. The axial bearing pads may comprise an elastomer for contacting the axial collar, for example. The axial bearing pads may be serviced or replaced when they are worn off or fail due to the load applied onto them by means of the axial collar.

Further, the axial bearing pads may be attached via axial tiltable support structures to the axial bearing stop so as to be tiltable with respect to the axial collar. Thereby, tolerances between the axial collar and the axial bearing pads can be compensated for.

Preferably, the axial bearing stop is arranged at the bearing housing. Thereby, the loads applied onto the axial bearing stop are conveniently forwarded to the bearing arrangement.

Moreover preferably, the axial bearing stop is arranged about an entire circumference of the bearing housing. Thereby, a large mass on the axial bearing stop for taking axial loads is provided and the overall load distribution on the axial bearing stop is improved.

It is preferred, that the axial bearing stop extends inwards of the bearing housing. In other words, the axial bearing stop extends radially inwards relative to a cylindrical surface of the bearing housing. Thereby, the axial bearing stop is favorably located on an inside of the bearing housing, which allows for a simple design of the axial bearing.

Preferably, the axial bearing stop is integrally formed with the bearing housing as a protrusion extending from the bearing housing in a radial direction of the bearing housing. Preferably, the axial bearing stop is arranged at a downwind end of the bearing housing. Thereby, the axial bearing stop may be easily attached to the bearing housing.

According to a second aspect of the invention, the invention relates to a wind turbine comprising a bearing arrangement according to the invention, whereby the wind turbine further comprises a rotor connected to drive the drive shaft and a generator connected to be driven by the drive shaft.

The generator may be a direct drive generator or a geared generator having a gearbox, for example. The rotor is also commonly referred to as a hub of the wind turbine. Two, three or more wind turbine blades may be attached to the rotor or hub. The wind turbine may further comprise a nacelle, which may be supported on a tower of the wind turbine. The nacelle may comprise the bearing arrangement. The bearing arrangement, in particular the bearing housing, and the generator may be attached to the nacelle and/or the tower.

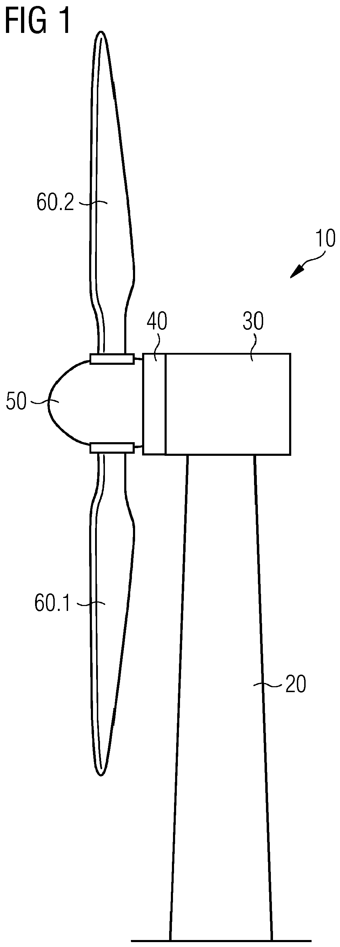

Further advantages, features and details of the invention unfold from the following description, in which by reference to drawings FIG. 1 to 7 embodiments of the present invention are described in detail. Thereby, the features from the claims as well as the features mentioned in the description can be essential for the invention as taken alone or in an arbitrary combination. In the drawings, there is schematically shown:
- FIG. 1: a side view on a wind turbine,
- FIG. 2: a side perspective view on a sectional cut along the longitudinal axis of a bearing arrangement of the wind turbine of FIG. 1,
- FIG. 3: a side view on a sectional cut along the bearing arrangement of the wind turbine of FIG. 1,
- FIG. 4: shows a view on a detail of the bearing arrangement of FIG. 3,
- FIG. 5: shows a view on a further detail of the bearing arrangement of FIG. 3,
- FIG. 6: shows a side perspective view on another bearing arrangement of the wind turbine of FIG. 1, and
- FIG. 7: shows a view on a detail of the bearing arrangement of FIG. 6.

Same objects in FIG. 1 to 7 are denominated with the same reference number. If there is more than one object of the same kind in one of the figures, the objects are numbered in ascending order with the ascending number of the object being separated from its reference number by a dot. The specific dimensions of features and parts in the figures are exemplary and may be enlarged for ease of reference only.

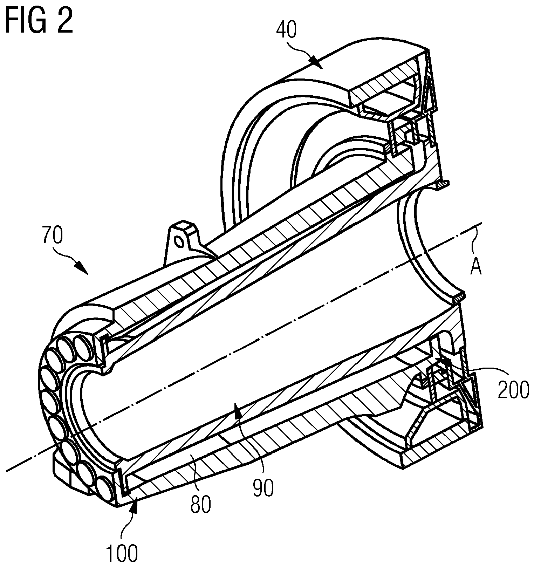

FIG. 1 shows a side view on a wind turbine 10. The wind turbine 10 comprises a supporting tower 20 and a nacelle 30, whereby the nacelle 30 is attached to the supporting tower 20. The nacelle 30 comprises a bearing arrangement 70, which is not shown in FIG. 1 but can be seen in FIG. 2. The wind turbine 10 further comprises a generator 40 attached to a rotor 50 of the wind turbine 10. Two wind turbine blades 60.1, 60.2 are attached to the rotor 50.

FIG. 2 shows a side perspective view on a sectional cut along the longitudinal axis A of the bearing arrangement 70 of the wind turbine 10 of FIG. 1. The bearing arrangement 70 comprises a bearing housing 80 and a drive shaft 90, whereby the drive shaft 90 is arranged within the bearing housing 80 in an axial direction along the longitudinal axis A of the bearing housing 80 as indicated in FIG. 2. The longitudinal axis A of the bearing housing 80 corresponds to the longitudinal axis A of the drive shaft 90 and thereby is a longitudinal axis A of the bearing arrangement 70. The bearing arrangement 90 further comprises a downwind bearing 100 and an upwind bearing 200 as radial fluid bearings, whereby the downwind bearing 100 and the upwind bearing 200 are arranged between the bearing housing 80 and the drive shaft 90. In particular, the downwind bearing 100 is arranged about a downwind portion of the drive shaft 90 and the upwind bearing 200 is arranged about an upwind portion of the drive shaft 90. The drive shaft 90 is operatively connected to the generator 40. The generator 40 is shown as a direct drive generator. However, it is also possible to provide the generator 40 as a geared generator, for example.

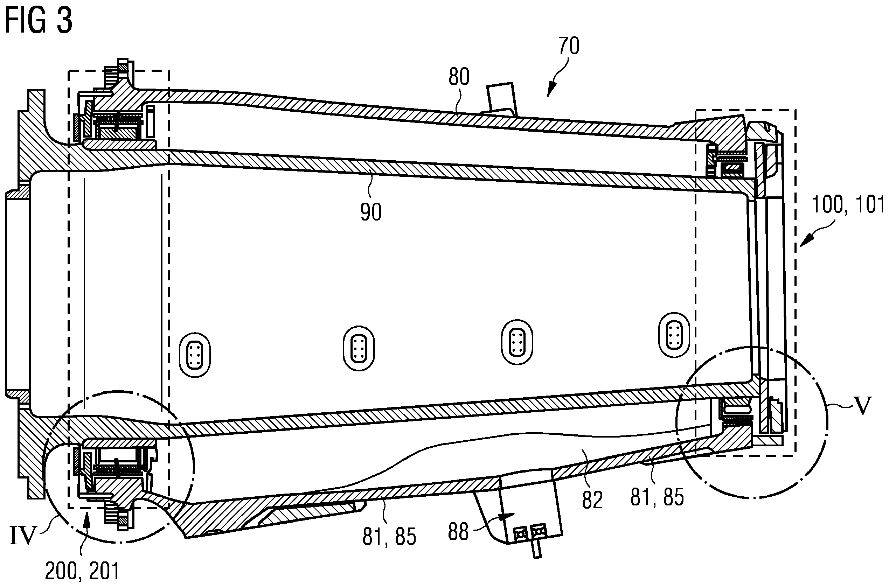

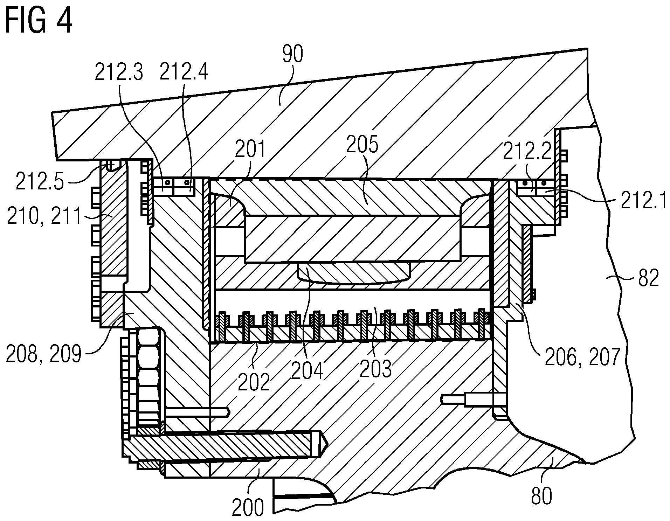

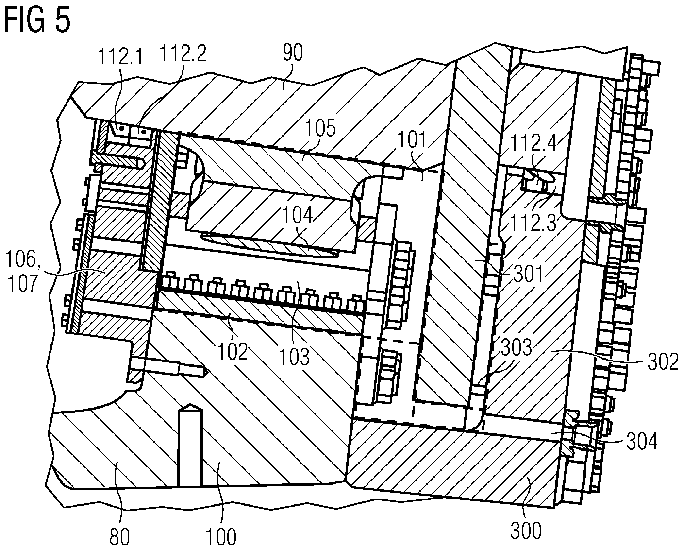

FIG. 3 shows a side view on a sectional cut along the longitudinal axis A of the bearing arrangement 70 of FIG. 2. An internal space 82 of the bearing housing 80 is formed between the bearing housing 80 and the drive shaft 90. Lubricant may leak from the downwind bearing 100 and the upwind bearing 200 into the internal space 82 and thereby be collected in the bearing housing 80, which is formed as a funnel 85 in a bottom part of the bearing housing 80. A lubricant pump 88 is fluidically connected to a drain outlet (not shown) of the bearing housing 80. Moreover, the downwind bearing 100 comprising a lubricant flooded chamber 101 and the upwind bearing 200 comprising a lubricant flooded chamber 201 are shown, the principle and features of which will further be explained with reference to FIG. 4 and FIG. 5.

FIG. 4 shows an enlarged view on the sectional cut through the upwind bearing 200 and its lubricant flooded chamber 201 according to the detail IV of FIG. 3. A radial bearing body 203 is attached to the bearing housing 80. Specifically, the radial bearing body 203 is attached to a cylindrical seat 202 formed in the bearing housing 80. A radial tiltable support structure 204 is secured to the radial bearing body 203. A radial bearing pad 205 is attached to the radial tiltable support structure 204. The radial bearing pad 205 is arranged in sliding contact with the drive shaft 90. The radial tiltable support structure 204 allows for a tilting movement of the radial bearing pad 205. Multiple of such radial bearing units comprising a radial bearing body 203, a radial tiltable support structure 204 and a radial bearing pad 205 are arranged in series along the cylindrical seat 202 in the lubricant flooded chamber 201, in particular along a circumference of the cylindrical seat 202 of the upwind bearing 200.

The lubricant flooded chamber 201 of the upwind bearing 200 is sealed by means of an inner sealing 206 against the internal space 82 of the bearing housing 80. The inner sealing 206 of the lubricant flooded chamber 201 of the upwind bearing 200 comprises multiple inner sealing plates 207. Two lip seals 212.1, 212.2 are arranged in series between the inner sealing 206 and the drive shaft 90 so as to seal the sealing 206 against the drive shaft 90.

The lubricant flooded chamber 201 of the upwind bearing 200 is sealed against an outside of the bearing housing 80 by means of an outer sealing 208 and a dust sealing 210. The outer sealing 208 comprises an outer seal plate 209 and two lip seals 212.3, 212.4 arranged in series in between the outer seal plate 209 and the drive shaft 90. The dust sealing 210 is formed by a dust seal plate 211 and a further lip seal 212.5 arranged between the dust seal plate and the drive shaft 90. The dust sealing 210 is located towards the outside of the bearing housing 80. The dust sealing 210 sandwiches the outer sealing 208 in between the dust sealing 210 and the outer sealing 206.

FIG. 5 shows an enlarged view on the sectional cut through the downwind bearing 100 and its lubricant flooded chamber 101 according to the detail V of FIG. 3. A radial bearing body 103 is attached to a bearing housing 80. Specifically, the radial bearing body 103 is attached to a cylindrical seat 102 formed in the bearing housing 80. A radial tiltable support structure 104 is secured to the radial bearing body 103. A radial bearing pad 105 is attached to the radial tiltable support structure 104. The radial bearing pad 105 is arranged in sliding contact with the drive shaft 90. The radial tiltable support structure 104 allows for a tilting movement of the radial bearing pad 105. Multiple of such radial bearing units comprising a radial bearing body 103, a radial tiltable support structure 104 and a radial bearing pad 105 are arranged in a series along the cylindrical seat 102 in the lubricant flooded chamber 101, in particular along a circumference of the cylindrical seat 102 of the downwind bearing 100.

The lubricant flooded chamber 101 of the downwind bearing 100 is sealed by means of an inner sealing 106 against the internal space 82 of the bearing housing 80. The inner sealing 106 of the lubricant flooded chamber 101 of the downwind bearing 100 comprises multiple inner sealing plates 107. Two lip seals 112.1, 112.2 are arranged in series between the inner sealing 106 and the drive shaft 90 so as to seal the sealing 106 against the drive shaft 90.

The lubricant flooded chamber 101 is fluidically connected to an effective path provided by a lubricant flow channel 303 of an axial bearing 300 of the bearing arrangement 70. The axial bearing 300 comprises an axial collar 301 and multiple axial bearing pads (not shown here, because the sectional cut goes through the axial bearing stop 302, only) attached to an axial bearing stop 302. As can be seen in FIG. 5, different from the invention, the axial collar 301 is not integrally formed with the drive shaft 90 but attached to the drive shaft 90 as a separate part by means of bolts, one of which is shown. However, the other features and parts shown in the bearing arrangement 70 of FIG. 3 to 5 may be fulfilled in bearing arrangement 70 of the invention as well. The axial collar 301 extends outwards from the drive shaft 90. The axial collar 301 extends along an entire circumference of the drive shaft 90. The lubricant flow channel 303 of the axial bearing 300 is formed between the axial collar 301 and the multiple axial bearing pads of the axial bearing stop 302. An overflow channel 304 of the axial bearing 300 is arranged in fluidical contact with the lubricant flooded chamber 101. By means of the overflow channel 304, excessive lubricant may be released out of the lubricant flooded chamber 101. The overflow channel 304 may be connected to the internal space 82 for releasing the lubricant into the bearing housing 80. The downwind bearing 100 has the axial bearing 300 as a sealing of the lubricant flooded chamber 101 against the outside of the bearing housing 80.

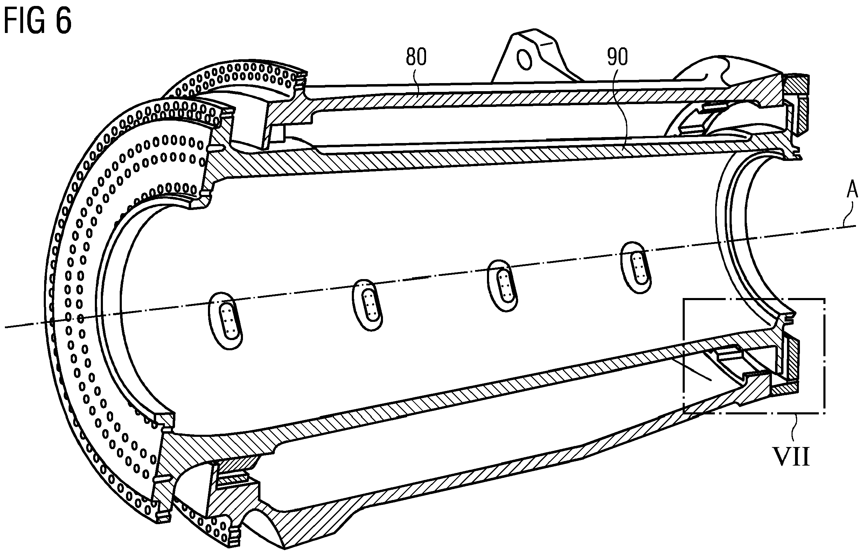

FIG. 6 shows a side perspective view on another bearing arrangement 70 of the wind turbine 10 of FIG. 1, in which the downwind bearing 100 and the upwind bearing 200 have been omitted for presentation purposes only. The drive shaft 90 has a cylindrical shape. Further, the bearing housing 80 has a cylindrical shape.

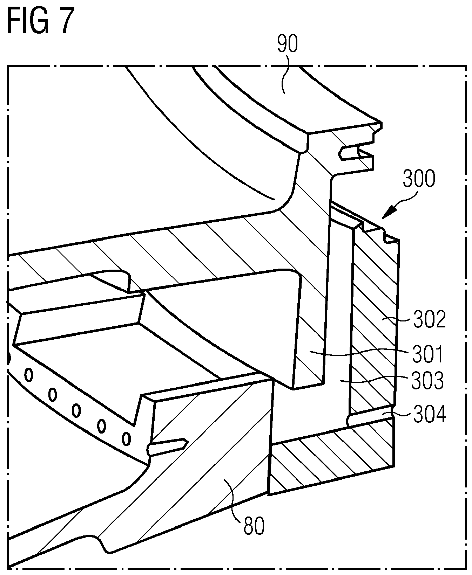

FIG. 7 shows a view on a detail VII of the bearing arrangement 70 of FIG. 6. As can be seen, the axial collar 301 of the axial bearing is integrally formed with the drive shaft 90 in accordance with the invention. The axial collar 301 extends radially outwards from the drive shaft 90 and along an entire circumference of the drive shaft 90, whereby due to the sectional cut, this can only be seen partially.

## Claims

1. Bearing arrangement (70) for a wind turbine (10) comprising a bearing housing (80) and a drive shaft (90), whereby the drive shaft (90) is arranged within the bearing housing (80) in an axial direction along a longitudinal axis (A) of the bearing housing (80), the bearing arrangement (70) further comprising a downwind bearing (100) and an upwind bearing (200) as radial fluid bearings, whereby the downwind bearing (100) and the upwind bearing (200) are arranged between the bearing housing (80) and the drive shaft (90), the bearing arrangement (70) further comprising an axial bearing (300),
**characterized in that**,
the axial bearing (300) comprises an axial collar (301), whereby the axial collar (301) is integrally formed with the drive shaft (90).

2. Bearing arrangement (70) according to claim 1,
**characterized in that**,
the axial collar (301) is monolithically designed with the drive shaft (90).

3. Bearing arrangement (70) according to claim 1 or 2,
**characterized in that**,
the axial collar (301) is arranged about an entire circumference of the drive shaft (90).

4. Bearing arrangement (70) according to any of the previous claims,
**characterized in that**,
the axial collar (301) extends outwards of the drive shaft (90) .

5. Bearing arrangement (70) according to any of the previous claims,
**characterized in that**,
the axial bearing (301) is arranged at a downwind portion or an upwind portion of the drive shaft (90).

6. Bearing arrangement (70) according to any of the previous claims,
**characterized in that**,
the downwind bearing (100) or the upwind bearing (200) of the bearing arrangement (70) is located adjacent to the axial bearing (300).

7. Bearing arrangement (70) according to any of the previous claims,
**characterized in that**,
the downwind bearing (100) or the upwind bearing (200) is fluidically connected to the axial bearing (300).

8. Bearing arrangement (70) according to any of the previous claims,
**characterized in that**,
the axial bearing (300) comprises an axial bearing stop (302) arranged opposite of the axial collar (301).

9. Bearing arrangement (70) according to claim 8,
**characterized in that**,
multiple axial bearing pads are, in particular reversibly, attached to the axial bearing stop (302), whereby an effective path of the axial bearing (300) is formed between the axial collar (301) and the multiple axial bearing pads.

10. Bearing arrangement (70) according to claim 8 or 9,
**characterized in that**,
the axial bearing stop (302) is arranged at the bearing housing (80).

11. Bearing arrangement (70) according to any of claims 8 to 10,
**characterized in that**,
the axial bearing stop (302) is arranged about an entire circumference of the bearing housing (80).

12. Bearing arrangement (70) according to any of claims 8 to 11,
**characterized in that**,
the axial bearing stop (302) extends inwards of the bearing housing (80).

13. Bearing arrangement (70) according to any of claims 8 to 12,
**characterized in that**,
the axial bearing stop (302) is integrally formed with the bearing housing (80) as a protrusion extending from the bearing housing (80) in a radial direction of the bearing housing (80) .

14. Bearing arrangement (70) according to any of claims 8 to 13,
**characterized in that**,
the axial bearing stop (302) is arranged at a downwind end of the bearing housing (80).

15. Wind turbine (10) comprising a bearing arrangement (70) according to any of the previous claims, whereby the wind turbine (10) further comprises a rotor (50) operatively connected to drive the drive shaft (90) and a generator (40) operatively connected to be driven by the drive shaft (90).
